# EUROPEAN PATENT SPECIFICATION

(11) **EP 2 853 124 B1**
(45) Date of publication and mention of the grant of the patent: **21.06.2017**
(21) Application number: 12877435.3
(22) Date of filing: 22.05.2012
(51) Int. Cl.: H04W 72/04, H04W 84/12

(54) **METHOD AND APPARATUS FOR SIGNALLING TRANSMISSIONS**
VERFAHREN UND VORRICHTUNG ZUR SIGNALISIERUNG VON ÜBERTRAGUNGEN
PROCÉDÉ ET APPAREIL POUR DES TRANSMISSIONS DE SIGNALISATION

(43) Date of publication of application: 01.04.2015
(73) Proprietor: Nokia Technologies Oy, 02610 Espoo (FI)
(72) Inventor: LIU, Yang, Beijing 100191 (CN); LI, Haitao, Beijing 100085 (CN)
(74) Representative: Seppo Laine Oy
(86) International application number: PCT/CN2012/075902
(87) International publication number: WO 2013/173978

(56) References cited:
- EP-A2- 2 111 081
- WO-A1-2010/105693
- WO-A1-2011/039571
- WO-A1-2011/121174
- WO-A1-2013/163814
- WO-A2-2010/137863
- CN-A- 101 860 910
- US-A1- 2011 176 531
- US-A1- 2011 188 408

## Description

### FIELD OF THE INVENTION

Embodiments of the present invention generally relate to wireless communication techniques including the 3GPP (the 3rd Generation Partnership Project) LTE (Long Term Evolution) technique. More particularly, embodiments of the present invention relate to a method, an apparatus, and a computer program product for signalling transmissions.

### BACKGROUND OF THE INVENTION

Various abbreviations that appear in the specification and/or in the drawing figures are defined as below:
- AM: Acknowledged Mode
- AP: Access Point
- BS: Base Station
- CCCH: Common Control Channel
- CN: Core Network
- DCCH: Dedicated Control Channel
- eNB: evolved Node B
- EPS: Enhanced Packet System
- EPC: Enhanced Packet Core
- GW: Gateway
- HLR: Home Location Register
- HSS: Home Subscriber Server
- IP: Internet Protocol
- LAN: Local Area Network
- MAC: Medium Access Control
- MME: Mobility Management Entity
- MSC: Mobile Switching Centre
- NAS: Non Access Stratum
- OAM: Operations, Administrations and Maintenance
- PDCP: Packet Data Convergence Protocol
- PDU: Protocol Data Unit
- RB: Radio Bearer
- RLC: Radio Link Control
- RRC: Radio Resource Control
- RRM: Radio Resource Management
- SRB: Signalling Radio Bearer
- SDU: Service Data Unit
- TM: Transparent Mode
- UE: User Equipment
- UM: Unacknowledged Mode
- VLR: Visitor Location Register
- WAN: Wide Area Network

The following description of background art may include insights, discoveries, understandings or disclosures, or associations together with disclosures not known to the relevant art prior to the present invention but provided by the present invention. Some such contributions of the present invention may be specifically pointed out below, while other such contributions of the present invention will be apparent from their context.

With the rapid developments of an LTE system, a high-speed data service is of increasing importance to meeting the requirements of wireless communication users. It is known that a LAN system generally provides a relatively high speed data service. Therefore, how to provide a local service with a high speed data rate under a wireless communication system, e.g., an LTE system, has become a hot topic in the 3GPP.

US2011176531 discloses a system for local breakout traffic in a home base station. A local breakout bearer is established which is a radio bearer that extends between the mobile terminal and the home base station. The local breakout bearer may be established integrated in radio resource control signaling.

EP2111081 discloses a method and apparatus for improving RRC connection procedure in 3GPP LTE system. A lower layer protocol entity for a signaling radio bearer is re-set or re-established when a cell reselection occurs.

US2011/188408 discloses a method of selectively applying a PDCP function based on data characteristic transmitted through a radio bearer in an evolved UMTS system, LTE or LTE-Advanced system. An RRC message may include an indication of type of radio bearer on the basis of which corresponding PDCP function is applied.

WO2013/163814, falling under Art. 54 (3) EPC, relates to recovering connection in LTE local area network for EPS and local services. A local connection re-establishment request is sent to a local access apparatus in response to a failure of a radio link by which user equipment was connected to a local network and operated in a single radio mode to use bearer services provided by a macro network. Local signalling radio bearer is recovered in response to successfully verifying, by the local access apparatus, local context of the user equipment.

### SUMMARY OF THE INVENTION

The following presents a simplified summary of the present invention in order to provide a basic understanding of some aspects of the present invention. It should be noted that this summary is not an extensive overview of the present invention and that it is not intended to identify key/critical elements of the present invention or to delineate the scope of the present invention. Its sole purpose is to present some concepts of the present invention in a simplified form as a prelude to the more detailed description that is presented later.

One embodiment of the present invention provides a method. The method comprises generating an RRC message relating to a local service between a UE and a LAN access point which is connected to a wide area BS. The method also comprises sending the RRC message over a dedicated SRB, wherein the dedicated SRB is secured based upon an independent security policy other than an SRB relating to a service between the UE and the wide area BS.

In one embodiment, the dedicated SRB has a lower priority than an SRB0.

In another embodiment, the dedicated SRB has a same priority as an SRB1.

In a further embodiment, the dedicated SRB has a higher or lower priority than a SRB 1.

In an additional embodiment, the dedicated SRB uses a DCCH and an AM RLC entity.

In one embodiment, the LAN AP is deployed by a third party or a LAN operator other than a WAN operator which provides wireless communication between the UE and the wide area BS such that the LAN AP uses a different security policy from the wide area BS.

In a further embodiment, the method is performed by the LAN AP and the method further comprises receiving a further RRC message relating to a service between the UE and the wide area BS. The method also comprises selecting one of SRB 1 and SRB2 with respect to the further RRC message. The method additionally comprises sending the further RRC message over the selected SRB.

One embodiment of the present invention provides an apparatus. The apparatus comprises means for generating an RRC message relating to a local service between a UE and a LAN AP which is connected to a wide area BS. The apparatus also comprises means for sending the RRC message over a dedicated SRB.

A further embodiment of the present invention provides an apparatus. The apparatus comprises at least one processor and at least one memory including computer program instructions. The at least one memory and computer program instructions are configured to, with the at least one processor, cause the apparatus at least to generate an RRC message relating to a local service between a UE and a LAN AP which is connected to a wide area BS. The at least one memory and computer program instructions are also configured to, with the at least one processor, cause the apparatus at least to send the RRC message over a dedicated SRB.

One embodiment of the present invention provides a computer program product, comprising at least one computer readable storage medium having a computer readable program code portion stored thereon. The computer readable program code portion comprises program code instructions for generating an RRC message relating to a local service between a UE and a LAN AP which is connected to a wide area BS. The computer readable program code portion also comprises program code instructions for sending the RRC message over a dedicated SRB.

### BRIEF DESCRIPTION OF THE DRAWINGS

The embodiments of the present invention that are presented in the sense of examples and their advantages are explained in greater detail below with reference to the accompanying drawings, in which:
Fig. 1 illustrates an exemplary LTE-LAN network architecture according to an embodiment of the present invention;
Fig. 2 is a flow chart schematically illustrating a method for signalling transmissions according to an embodiment of the present invention;
Fig. 3 illustrates an exemplary control plane protocol stack in a single radio mode in which certain embodiments of the present invention may be practiced;
Fig. 4 shows a messaging diagram illustrating exemplary signalling according to an embodiment of the present invention; and
Fig. 5 is a simplified schematic block diagram illustrating apparatuses according to an embodiment of the present invention.

### DETAILED DESCRIPTION OF EMBODIMENTS

An LTE-LAN (or LTE-Hi) technique may be considered to compete with a Wi-Fi technique. The LTE-LAN is basically assumed to be based upon LTE technology but is more focused on certain local area use cases and scenarios. The LTE-LAN is expected to provide high performance service for users with low cost, and is expected to become a competitor to the Wi-Fi.

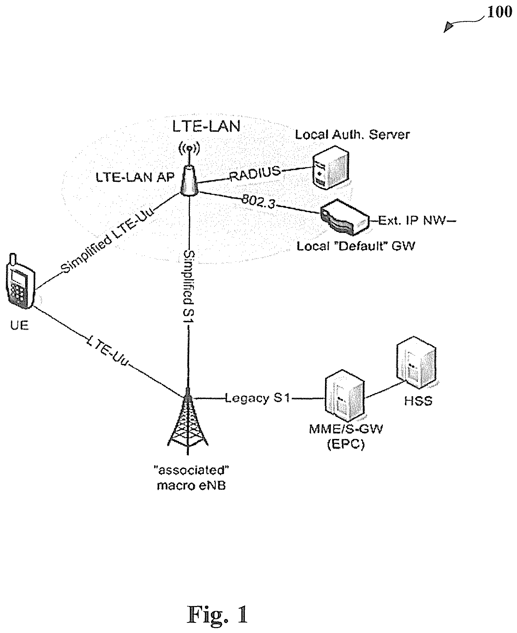

Fig. 1 illustrates an LTE-LAN network architecture with exemplary network entities and interfaces between these entities. As shown in Fig. 1, the LTE-LAN applies a new LTE-like radio interface as a "simplified LTE-Uu" interface between a UE and an LTE-LAN AP. Due to the requirement of less CN involvement, the LTE-LAN network according to certain embodiments of the present invention supports a "stand-alone" mode where the LTE-LAN network is working autonomously by providing a basic wireless broadband access with UE traffic routing to a local LAN/IP network directly from an LTE-LAN AP and to the internet via a default GW of this local LAN/IP network. This autonomous "stand-alone" mode operation is useful especially in the case where overlaying macro network service (also termed a wide area service in the present invention) coverage, e.g., provided by an "associated" macro eNB (also termed a wide area BS in the present invention) as illustrated in Fig. 1, is missing. The local LAN transport network may include an ordinary Ethernet-based LAN, i.e. IEEE 802.3, as shown in Fig. 1. In general, this stand-alone LTE-LAN operation resembles existing Wi-Fi network solutions except that the radio interface is using said simplified LTE-Uu interface.

For the autonomous stand-alone mode operation as discussed above, the LTE-LAN network provides means for UE authentication and authorization to use services provided by the LTE-LAN network. This may be implemented by using similar methods as applied in WLAN (IEEE 802.11i) but modified to carry the authentication protocol messages, e.g. EAP encapsulated into LTE Uu RRC messages. In Fig. 1, there is shown an optional local authentication server that may be a RADIUS server or a diameter server like the one used in enterprise Wi-Fi networks.

The above means might be advantageous since such autonomous (local area) operations to a mobile CN may enable LTE-LAN local access services deployment and operation either by a different mobile operator than the macro eNB, or a local access network operator (third party), where the usage of LTE-LAN network locally supported services may be kept transparent to the CN for simplicity and for lightening signalling load exposed to the CN.

However, a problem may arise during signalling transmissions when the UE is in a single radio mode in which the UE may only communicate with the "associated" macro eNB via the LTE-LAN AP rather than communicating directly with the macro eNB and indirectly therewith via the LTE-LAN AP simultaneously, i.e., in a dual radio mode. Below are discussions with respect to the problem.

In the LTE system, there are three types of SRBs between a UE and an eNB, i.e., SRB0, SRB1 and SRB2, wherein:
- SRB0 is for RRC messages using the CCCH;
- SRB1 is for RRC messages (which may include a piggybacked NAS message) as well as for NAS messages prior to the establishment of SRB2, all using the DCCH; and
- SRB2 is for RRC messages which include logged measurement information as well as for NAS messages, all using the DCCH. SRB2 has a lower priority than SRB1 and is always configured by E-UTRAN after security activation.

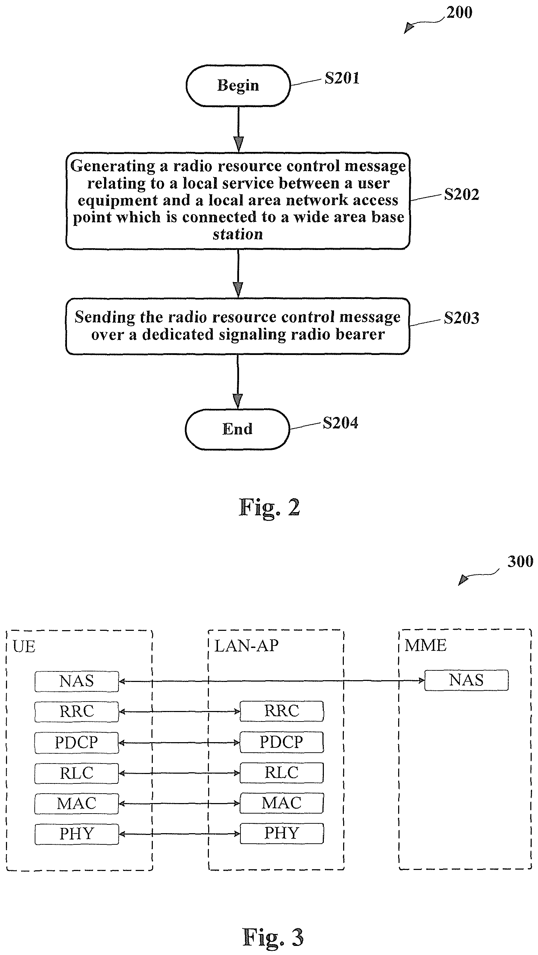

Based upon the above specification, the eNB and UE will use different SRBs for different RRC messages based upon the information included therein. For example, when an RRCConnectionRequest message is sent on the CCCH and there is no security concern for this message, the RRCConnectionRequest message would use SRB0 for transmission. Again, when an RRCConnectionReconfiguration message is sent from the eNB to the UE on the DCCH, it is ciphered and integrity checked at a PDCP layer (e.g., one illustrated in Fig. 3) and should use SRB1 for transmission. Additionally, when an ULInformationTransfer message containing NAS PDU (s) is sent on the DCCH and ciphered based upon related NAS layer security keys, it should use SRB2 for transmission.

Although the above specification with respect to the use of SRBs may be efficiently applied in the LTE system, it could be contradictory or inconvenient to the LTE-Hi system. In the LTE-Hi, a LAN AP can initiate local services by establishing local bearers without the participation of an EPS network, meaning that the LAN AP can utilize an independent security mechanism for local bearer protection. Meanwhile, according to LTE rules concerning the SRB concept, those RRC messages concerning local bearers which are not secured based upon LTE security rules should also be carried by related SRBs, e.g., SRB0, SRB1 and SRB2 as discussed above. However, a current LTE-Hi AP may not have a capability of supporting LTE security functions since the LTE-Hi system is likely to be deployed by a third party or a different network operator, which would use a different security strategy or mechanism from a WAN operator which has deployed the macro eNB(s). In this case, most RRC messages cannot be carried in SRB1 and SRB2, which would lead to the result that the LAN AP is not able to use SRB(s) to carry RRC messages according to the LTE principles.

To address the above potential problem, certain embodiments of the present invention would provide for an efficient way of mapping different RRC messages to different SRBs according to different types of services such that signalling transmissions can be performed properly and correctly under different security policies of local and wide coverage areas. Further, a stable performance of local RRC procedures for a simplified Uu interface could be guaranteed.

Fig.2 is a flow chart schematically illustrating a method 200 for signalling transmissions according to an embodiment of the present invention. As illustrated in Fig. 2, the method 200 begins at step S201 and generates an RRC message relating to a local service between a UE and a LAN AP which is connected to a wide area BS at step S202.

Upon completion of the generating at step S202, the method 200 proceeds to step S203 at which the method 200 sends the RRC message over a dedicated SRB, which my be referred to as SRB3 for easy discussions. In an embodiment, the dedicated SRB has a lower priority than an SRB0. In another embodiment, the dedicated SRB has a same priority as an SRB1. In a further embodiment, the dedicated SRB has a higher or lower priority than an SRB1. In an embodiment, the dedicated SRB is secured based upon an independent security policy other than the SRB1 and SRB2. In an additional embodiment, the dedicated SRB uses a DCCH and an AM RLC entity.

In some embodiments, the LAN AP is deployed by a third party or a LAN operator other than a WAN operator which provides wireless communication between the UE and the wide area BS (e.g., a macro eNB) such that the LAN AP uses a different security policy from the wide area BS.

Finally, the method 200 ends at step S204.

Although not illustrated in Fig. 2, it can be understood that the method 200 can be performed by or at the UE and the LAN AP. Further, in some embodiments, when the method 200 is performed by the LAN AP, it receives a further RRC message relating to a service between the UE and the wide area BS, selects one of SBR1 and SRB2 with respect to the further RRC message, and sends the further RRC message over the selected SRB. Specifically, the LAN (or LTE-Hi) AP may maintain the mapping relationships between RRC messages and the correct SRB based upon the source of related RRC procedures (e.g., stemming from local services or EPS services). For example, RRC messages driven by the EPS service should be mapped to SRB1 and SRB2, while RRC message driven by the local services should be mapped to the dedicated SRB3. Upon prior configurations, SRB3 should not be ciphered by an LTE security mechanism which may cipher the SRB1 and SRB2 but by a local area specific security mechanism. Additionally, SRB0 can be used no matter whether it is triggered by a local service request or an EPS service request. In other words, SRB0 could be shared between these two types of services.

According to certain embodiments of the present invention, because a dedicated SRB that can possibly be ciphered by an independent security mechanism is used for local signalling transmissions, the UE connected with the LTE-LAN AP can be served both local IP services and offloaded EPS services. Further, due to the definition of a dedicated SRB, the LAN AP is capable of flexibly, correctly and purposefully mapping different types of RRC messages to different SRBs.

Fig. 3 illustrates an exemplary control plane protocol stack in a single radio mode in which certain embodiments of the present invention may be practiced. It should be noted that a control plane protocol stack relating to a BS (or macro eNB) exists between the LAN-AP and MME and is not illustrated herein for a purpose of simplicity. As illustrated in Fig. 3, except for a NAS protocol layer, the UE and the LAN-AP may have, from the upper layers to the lower layers, their respect RRC, PDCP, RLC, MAC, and PHY protocol layers. With respect to the NAS protocol layer, the signalling messages between the UE and the macro LTE network are passed transparently via the LTE-LAN system in a similar manner as e.g., NAS messages are passed from the UE to the MME encapsulated in ciphered NAS containers.

Among these protocol layers between the UE and the LAN-AP, the RRC protocol layer may be in charge of the connection control, measurement configuration, and system information broadcasting; the PDCP protocol layer may be responsible for security handling, i.e., integrity protection/check and ciphering/de-ciphering, and also header compression for SRBs; and RLC protocol layer may form an appropriate RLC PDU suitable for transmission by the segmentation and concatenation functions of an RLC SDU received from the PDCP protocol layer and include a plurality of RLC entities which may be in one of the TM, UM and AM as configured. Handling within the MAC and PHY protocol layers below the RLC protocol layer is the same for transmission of an EPS RRC message between the UE and associated eNB over SRB1 or SRB2 and for transmission of a local RRC message between the UE and LTE-LAN AP over SRB3. The RRC message generated in the RRC protocol layer will be secured in the PDCP protocol layer according to the security requirement of this message. For example, the EPS RRC messages (i.e., wide area signalling messages) will be secured based upon EPS security keys in a PDCP entity included in the PDCP protocol layer. In contrast, according to certain embodiments of the present invention, the LAN RRC messages will be secured based upon local security mechanisms corresponding to SRB3 employed in a separate PDCP entity, subjected to the processing of an AM RLC entity and then delivered to the MAC and PHY protocol layers.

Upon receipt of the RRC messages from the UE, the LTE-LAN AP is capable of differentiating whether the received message is for local usage or for EPS usage. For example, if the RRC message has been secured according to a local security policy, which implies that this RRC message has been sent over SRB3, the AP is able to recognize or identify this message by means of the fingerprints/formats of secured data since the local and EPS messages may have mutual different formats after secured. Alternatively, the AP can also identify the message from the header for a certain protocol layer e.g., a PDCP layer header.

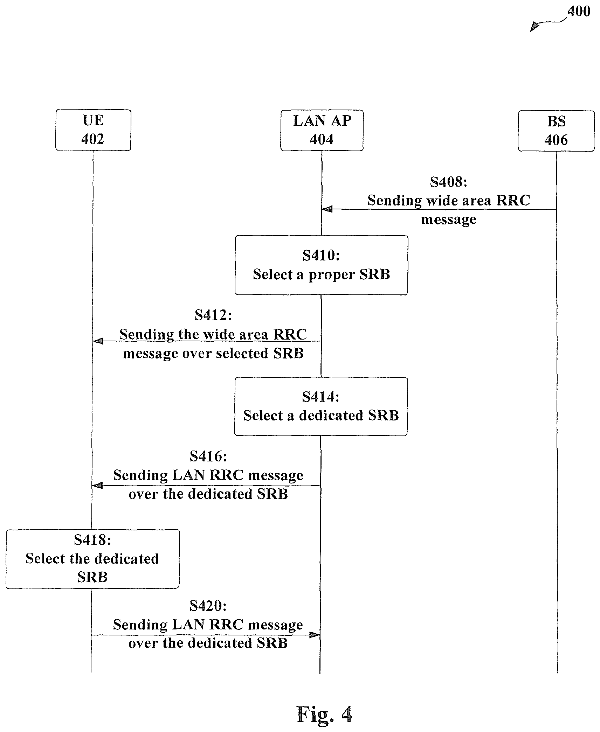

Fig. 4 shows a messaging diagram 400 illustrating exemplary signalling according to an embodiment of the present invention. As illustrated in Fig. 4, the BS (or macro eNB) 406 sends a wide area (e.g., an EPS) RRC message to the LAN-AP 404 at step S408, wherein the wide area RRC message may be e.g., a RRCConnectionRequest message or a RRCConnectionReconfiguration message. Upon receiving the wide area RRC message, the LAN AP 404 may identify that it relates to an EPS related service, and then at step S410, select a proper SRB for this message. As noted above, the LAN AP may select an SRB0 for the RRCConnectionRequest message and an SRB1 for the RRCConnectionReconfiguration message. Afterwards, the LAN AP 404 may send this wide area RRC message to the UE 402 over SRB0 or SRB 1. Although only one-way processing has been illustrated, it should be understood by those skilled in the art that this transmission of wide area RRC message can be performed in reverse from the UE 402 to the BS 406, which is not discussed herein for simplicity.

In addition to forwarding the wide area signalling message between the UE 402 and the BS 406, the LAN AP 404 may also select a dedicated SRB (i.e., SRB 3) at step S414 and send a LAN RRC message generated by itself over the dedicated SRB to the UE 402 at step S416. For example, when the LAN AP 404 plans to send an RRCConnectionReconfiguration message, it may select SRB3 and this message may be secured by a PDCD entity according to a local security policy independent of that for SRB1 and SRB2. Then, the RRCConnectionReconfiguration message would be passed through an AM RLC entity and mapped to the DCCH, as discussed above. The similar generating and sending steps may also be performed by the UE 402 at steps S418 and S420.

Continuing with the example of the RRCConnectionReconfiguration message, in response to receipt of this message, the UE 402 may generate an RRCConnectionReconfigurationComplete message and then select SRB3 for transmission of this local service related message.

It should be noted herein that the steps and execution order as illustrated Fig. 4 are only examples and are not restrictive to the present invention. Those skilled in the art, after reading the present specification, can change these steps, for example, by omitting, combining, or adding certain steps, changing the execution order of certain steps so as to adapt to different application demands.

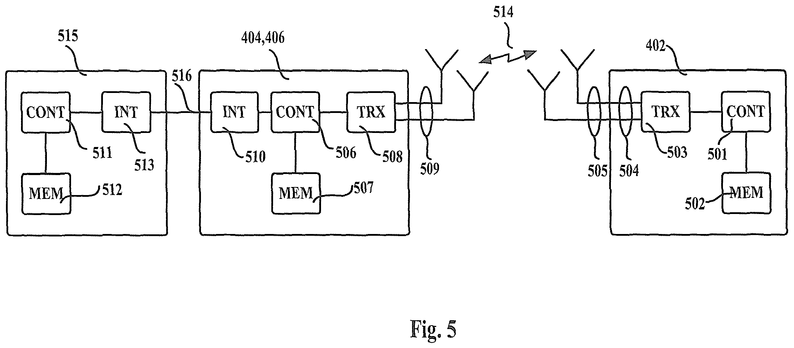

Fig. 5 is a simplified schematic block diagram illustrating apparatuses according to an embodiment of the present invention. As illustrated in Fig. 5, a UE 402 is located in the area of a radio network node 404 or 406 and is configured to be in connection with the radio network node 404 or 406. The UE 402 comprises a controller 501 operationally connected to a memory 502 and a transceiver 503. The controller 501 controls the operation of the UE 402. The memory 502 is configured to store software and data. The transceiver 503 is configured to set up and maintain a wireless connection 514 to the radio network node 404 or 406. The transceiver is operationally connected to a set of antenna ports 504 connected to an antenna arrangement 505. The antenna arrangement 505 may comprise a set of antennas. The number of antennas may be one to four, for example. The number of antennas is not limited to any particular number. The UE 402 may also comprise various other components, such as a user interface, camera, and media player. They are not displayed in the figure due to simplicity.

The radio network node 404 or 406, such as an LTE base station (or eNB) or LTE-LAN AP, comprises a controller 506 operationally connected to a memory 507, and a transceiver 508. The controller 506 controls the operation of the radio network node 404 or 406. The memory 507 is configured to store software and data. The transceiver 508 is configured to set up and maintain a wireless connection to the UE 402 within the service area of the radio network node 404 or 406. The transceiver 508 is operationally connected to an antenna arrangement 509. The antenna arrangement 509 may comprise a set of antennas. The number of antennas may be two to four, for example. The number of antennas is not limited to any particular number. The radio network node 404 or 406 may be operationally connected (directly or indirectly) to another CN or LAN network element 515 of the communication system, such as a radio network controller (RNC), an MME, an MSC server (MSS), an MSC, an RRM node, a gateway GPRS support node, an OAM node, an HLR, a VLR, a serving GPRS support node, a GW, and/or a server, via an interface 510. The network node 515 comprises a controller 511 operationally connected to a memory 512, and an interface 513. The controller 511 controls the operation of the network node 515. The memory 512 is configured to store software and data. The interface 513 is configured to connect to the radio network node 404 or 406 via a connection 516. The embodiments are not, however, restricted to the network given above as an example, but a person skilled in the art may apply the solution to other communication networks provided with the necessary properties. For example, the connections between different network elements may be realized with IP connections.

Although the apparatus 402, 404, 406, or 515 has been depicted as one entity, different modules and memory may be implemented in one or more physical or logical entities. The apparatus may also be a user terminal which is a piece of equipment or a device that associates, or is arranged to associate, the user terminal and its user with a subscription and allows a user to interact with a communications system. The user terminal presents information to the user and allows the user to input information. In other words, the user terminal may be any terminal capable of receiving information from and/or transmitting information to the network, connectable to the network wirelessly or via a fixed connection. Examples of the user terminals include a personal computer, a game console, a laptop (a notebook), a personal digital assistant, a mobile station (mobile phone), a smart phone, and a line telephone.

The apparatus 402, 404, 406, or 515 may generally include a processor, controller, control unit or the like connected to a memory and to various interfaces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment.

The memory 502, 507, or 512 may include volatile and/or non-volatile memory and typically stores content, data, or the like. For example, the memory 502, 507, or 512 may store computer program code such as software applications (for example for the detector unit and/or for the adjuster unit) or operating systems, information, data, content, or the like for a processor to perform steps associated with operation of the apparatus 402, 404, or 406 in accordance with embodiments. The memory may be, for example, random access memory (RAM), a hard drive, or other fixed data memory or storage device. Further, the memory, or part of it, may be removable memory detachably connected to the apparatus.

The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method, comprising:
generating (S202) a radio resource control message relating to a local service between a user equipment (402) and a local area network access point (404) which is connected to a wide area base station (406); and **characterised by** sending (S203) the radio resource control message over a dedicated signalling radio bearer, wherein the dedicated signalling radio bearer is secured based upon an independent security policy other than a signalling radio bearer relating to a service between the user equipment and the wide area base station.

2. The method as recited any preceding claim, wherein the dedicated signalling radio bearer uses a dedicated control channel and an acknowledgement mode radio link control entity.

3. The method as recited in any preceding claim, wherein the local area network access point (404) is deployed by a third party or a local area network operator other than a wide area network operator which provides wireless communication between the user equipment (402) and the wide area base station (406) such that the local area network access point uses a different security policy from the wide area base station (406).

4. The method as recited in any preceding claims 1 to 3, wherein it is performed by the local area network access point (404) and the method further comprises:
receiving (S408) a further radio resource control message relating to a service between the user equipment and the wide area base station;
selecting (S410) one of signalling radio bearers 1 and 2 with respect to the further radio resource control message; and
sending (S412) the further radio resource control message over the selected signalling radio bearer.

5. An apparatus, comprising:
means for generating (S202) a radio resource control message relating to a local service between a user equipment (S402) and a local area network access point (S404) which is connected to a wide area base station (S406); and **characterised by** means for sending (S203) the radio resource control message over a dedicated signalling radio bearer, wherein the dedicated signalling radio bearer is secured based upon an independent security policy other than a signalling radio bearer relating to a service between the user equipment and the wide area base station.

6. The apparatus as recited in Claim 5, wherein the dedicated signalling radio bearer has a lower priority than a signalling radio bearer 0.

7. The apparatus as recited in Claim 5, wherein the dedicated signalling radio bearer has a same priority as a signalling radio bearer 1.

8. The apparatus as recited in Claim 5, wherein the dedicated signalling radio bearer has a higher or lower priority than a signalling radio bearer 1.

9. The apparatus as recited in any of claims 5 to 8, wherein the dedicated signalling radio bearer uses a dedicated control channel and an acknowledgement mode radio link control entity.

10. The apparatus as recited in any of claims 5 to 9, wherein the local area network access point (404) is deployed by a third party or a local area network operator other than a wide area network operator which provides wireless communication between the user equipment (402) and the wide area base station (406) such that the local area network access point (404) uses a different security policy from the wide area base station (406).

11. The apparatus as recited in any of claims 5-10, wherein it is performed by the local area network access point (404) and the apparatus further comprises:
means for receiving (S408) a further radio resource control message relating to a service between the user equipment and the wide area base station;
means for selecting (S410) one of signalling radio bearers 1 and 2 with respect to the further radio resource control message; and
means for sending (S412) the further radio resource control message over the selected signalling radio bearer.

12. The apparatus as recited in any of claims 5 to 10, wherein the apparatus is a user terminal.

13. A computer program product, comprising at least one computer readable storage medium having a computer readable program code portion stored thereon, the computer readable program code portion comprising:
program code instructions for generating (S202) a radio resource control message relating to a local service between a user equipment (402) and a local area network access point (404) which is connected to a wide area base station (406); **characterised by** program code instructions for sending (S203) the radio resource control message over a dedicated signalling radio bearer, wherein the dedicated signalling radio bearer is secured based upon an independent security policy other than a signalling radio bearer relating to a service between the user equipment and the wide area base station.

## Patentansprüche

1. Verfahren, umfassend:
Erzeugen (S202) einer Funkressourcensteuernachricht, die sich auf einen lokalen Dienst zwischen einem Benutzergerät (402) und einem lokalen Netzwerkzugriffspunkt (404), der mit einer Weitbereich-Basisstation (406) verbunden ist, bezieht; und
**gekennzeichnet durch**
Senden (S203) der Funkressourcensteuernachricht über einen bestimmten Signalisierungsfunkträger, wobei der bestimmte Signalisierungsfunkträger auf der Grundlage einer unabhängigen Sicherheitsstrategie gesichert ist, außer einem Signalisierungsfunkträger, der sich auf einen Dienst zwischen dem Benutzergerät und der Weitbereich-Basisstation bezieht.

2. Verfahren nach einem vorstehenden Anspruch, wobei der bestimmte Signalisierungsfunkträger einen bestimmten Steuerkanal und eine Bestätigungsmodus-Funkverbindungssteuereinheit verwendet.

3. Verfahren nach einem vorstehenden Anspruch, wobei der lokale Netzwerkzugriffspunkt (404) von einem Drittanbieter oder einem lokalen Netzwerkbetreiber eingesetzt wird, außer von einem Weitbereichs-Netzwerkbetreiber, der drahtlose Kommunikation zwischen dem Benutzergerät (402) und der Weitbereich-Basisstation (406) bereitstellt, sodass der lokale Netzwerkzugriffspunkt eine Sicherheitsstrategie verwendet, die von der der Weitbereich-Basisstation (406) verschieden ist.

4. Verfahren nach einem der vorstehenden Ansprüche 1 bis 3, wobei es von dem lokalen Netzwerkzugriffspunkt (404) ausgeführt wird und das Verfahren weiter umfasst:
Empfangen (S408) einer weiteren Funkressourcensteuernachricht, die sich auf einen Dienst zwischen dem Benutzergerät und der Weitbereich-Basisstation bezieht;
Auswählen (S410) einen von Signalisierungsfunkträgern 1 und 2 bezüglich der weiteren Funkressourcensteuernachricht; und
Senden (S412) der weiteren Funkressourcensteuernachricht über den ausgewählten Signalisierungsfunkträger.

5. Vorrichtung, umfassend:
Mittel zum Erzeugen (S202) einer Funkressourcensteuernachricht, die sich auf einen lokalen Dienst zwischen einem Benutzergerät (S402) und einem lokalen Netzwerkzugriffspunkt (S404), der mit einer Weitbereich-Basisstation (S406) verbunden ist, bezieht; und
**gekennzeichnet durch**
Mittel zum Senden (S203) der Funkressourcensteuernachricht über einen bestimmten Signalisierungsfunkträger, wobei der bestimmte Signalisierungsfunkträger auf der Grundlage einer unabhängigen Sicherheitsstrategie gesichert ist, außer einem Signalisierungsfunkträger, der sich auf einen Dienst zwischen dem Benutzergerät und der Weitbereich-Basisstation bezieht.

6. Vorrichtung nach Anspruch 5, wobei der bestimmte Signalisierungsfunkträger eine niedrigere Priorität als ein Signalisierungsfunkträger 0 hat.

7. Vorrichtung nach Anspruch 5, wobei der bestimmte Signalisierungsfunkträger eine gleiche Priorität wie ein Signalisierungsfunkträger 1 hat.

8. Vorrichtung nach Anspruch 5, wobei der bestimmte Signalisierungsfunkträger eine höhere oder eine niedrigere Priorität als ein Signalisierungsfunkträger 1 hat.

9. Vorrichtung nach einem der Ansprüche 5 bis 8, wobei der bestimmte Signalisierungsfunkträger einen bestimmten Steuerkanal und eine Bestätigungsmodus-Funkverbindungssteuereinheit verwendet.

10. Vorrichtung nach einem der Ansprüche 5 bis 9, wobei der lokale Netzwerkzugriffspunkt (404) von einem Drittanbieter oder einem lokalen Netzwerkbetreiber eingesetzt wird, außer von einem Weitbereichs-Netzwerkbetreiber, der drahtlose Kommunikation zwischen dem Benutzergerät (402) und der Weitbereich-Basisstation (406) bereitstellt, sodass der lokale Netzwerkzugriffspunkt (404) eine Sicherheitsstrategie verwendet, die von der der Weitbereich-Basisstation (406) verschieden ist.

11. Vorrichtung nach einem der Ansprüche 5 bis 10, wobei es von dem lokalen Netzwerkzugriffspunkt (404) ausgeführt wird und die Vorrichtung weiter umfasst:
Mittel zum Empfangen (S408) einer weiteren Funkressourcensteuernachricht, die sich auf einen Dienst zwischen dem Benutzergerät und der Weitbereich-Basisstation bezieht;
Mittel zum Auswählen (S410) einen von Signalisierungsfunkträgern 1 und 2 bezüglich der weiteren Funkressourcensteuernachricht; und
Mittel zum Senden (S412) der weiteren Funkressourcensteuernachricht über den ausgewählten Signalisierungsfunkträger.

12. Vorrichtung nach einem der Ansprüche 5 bis 10, wobei die Vorrichtung ein Benutzerendgerät ist.

13. Computerprogrammprodukt, umfassend zumindest ein computerlesbares Speichermittel, das einen computerlesbaren Programmcodeabschnitt darauf gespeichert hat, wobei der computerlesbare Programmcodeabschnitt umfasst:
Programcodeanweisungen zum Erzeugen (S202) einer Funkressourcensteuernachricht, die sich auf einen lokalen Dienst zwischen einem Benutzergerät (402) und einem lokalen Netzwerkzugriffspunkt (404), der mit einer Weitbereich-Basisstation (406) verbunden ist, bezieht;
**gekennzeichnet durch**
Programcodeanweisungen zum Senden (S203) der Funkressourcensteuernachricht über einen bestimmten Signalisierungsfunkträger, wobei der bestimmte Signalisierungsfunkträger auf der Grundlage einer unabhängigen Sicherheitsstrategie gesichert ist, außer einem Signalisierungsfunkträger, der sich auf einen Dienst zwischen dem Benutzergerät und der Weitbereich-Basisstation bezieht.

## Revendications

1. Procédé, comprenant :
la génération (S202) d'un message de commande de ressource radio concernant un service local entre un équipement d'utilisateur (402) et un point d'accès de réseau local (404) qui est connecté à une station de base de zone étendue (406) ; et
**caractérisé par**
l'envoi (S203) du message de commande de ressource radio par un support radio de signalisation dédié, dans lequel le support radio de signalisation dédié est sécurisé sur la base d'une politique de sécurité indépendante autre qu'un support radio de signalisation concernant un service entre l'équipement d'utilisateur et la station de base de zone étendue.

2. Procédé selon une quelconque revendication précédente, dans lequel le support radio de signalisation dédié utilise un canal de commande dédié et une entité de commande de liaison radio en mode d'acquittement.

3. Procédé selon une quelconque revendication précédente, dans lequel le point d'accès de réseau local (404) est déployé par une tierce partie ou un opérateur de réseau local autre qu'un opérateur de réseau étendu qui fournit une communication sans fil entre l'équipement d'utilisateur (402) et la station de base de zone étendue (406) de sorte que le point d'accès de réseau local utilise une politique de sécurité différente à partir de la station de base de zone étendue (406).

4. Procédé selon une quelconque des revendications précédentes 1 à 3, dans lequel il est réalisé par le point d'accès de réseau local (404) et le procédé comprend en outre :
la réception (S408) d'un autre message de commande de ressource radio concernant un service entre l'équipement d'utilisateur et la station de base de zone étendue ;
la sélection (S410) d'un parmi des supports radio de signalisation 1 et 2 en ce qui concerne l'autre message de commande de ressource radio ; et
l'envoi (S412) de l'autre message de commande de ressource radio par le support radio de signalisation sélectionné.

5. Appareil, comprenant :
un moyen pour générer (S202) un message de commande de ressource radio concernant un service local entre un équipement d'utilisateur (S402) et un point d'accès de réseau local (S404) qui est connecté à une station de base de zone étendue (S406) ; et
**caractérisé par**
un moyen pour envoyer (S203) le message de commande de ressource radio par un support radio de signalisation dédié, dans lequel le support radio de signalisation dédié est sécurisé sur la base d'une politique de sécurité indépendante autre qu'un support radio de signalisation concernant un service entre l'équipement d'utilisateur et la station de base de zone étendue.

6. Appareil selon la revendication 5, dans lequel le support radio de signalisation dédié a une priorité inférieure à un support radio de signalisation 0.

7. Appareil selon la revendication 5, dans lequel le support radio de signalisation dédié a la même priorité qu'un support radio de signalisation 1.

8. Appareil selon la revendication 5, dans lequel le support radio de signalisation dédié a une priorité supérieure ou inférieure à un support radio de signalisation 1.

9. Appareil selon l'une quelconque des revendications 5 à 8, dans lequel le support radio de signalisation dédié utilise un canal de commande dédié et une entité de commande de liaison radio en mode d'acquittement.

10. Appareil selon l'une quelconque des revendications 5 à 9, dans lequel le point d'accès de réseau local (404) est déployé par une tierce partie ou un opérateur de réseau local autre qu'un opérateur de réseau étendu qui fournit une communication sans fil entre l'équipement d'utilisateur (402) et la station de base de zone étendue (406) de sorte que le point d'accès de réseau local (404) utilise une politique de sécurité différente à partir de la station de base de zone étendue (406).

11. Appareil selon l'une quelconque des revendications 5 à 10, dans lequel il est réalisé par le point d'accès de réseau local (404) et l'appareil comprend en outre :
un moyen pour recevoir (S408) un autre message de commande de ressource radio concernant un service entre l'équipement d'utilisateur et la station de base de zone étendue ;
un moyen pour sélectionner (S410) un parmi des supports radio de signalisation 1 et 2 en ce qui concerne l'autre message de commande de ressource radio ; et
un moyen pour envoyer (S412) l'autre message de commande de ressource radio par le support radio de signalisation sélectionné.

12. Appareil selon l'une quelconque des revendications 5 à 10, dans lequel l'appareil est un terminal d'utilisateur.

13. Produit-programme d'ordinateur, comprenant au moins un support lisible par ordinateur sur lequel est stockée une partie de code de programme lisible par ordinateur, la partie de code de programme lisible par ordinateur comprenant :
des instructions de code de programme destinées à la génération (S202) d'un message de commande de ressource radio concernant un service local entre un équipement d'utilisateur (402) et un point d'accès de réseau local (404) qui est connecté à une station de base de zone étendue (406) ;
**caractérisé par**
des instructions de code de programme pour l'envoi (S203) du message de commande de ressource radio par un support radio de signalisation dédié, dans lequel le support radio de signalisation dédié est sécurisé sur la base d'une politique de sécurité indépendante autre qu'un support radio de signalisation concernant un service entre l'équipement d'utilisateur et la station de base de zone étendue.
